# EUROPEAN PATENT APPLICATION

(11) **EP 4 534 596 A1**
(43) Date of publication of application: **09.04.2025**
(21) Application number: 23815461.1
(22) Date of filing: 16.01.2023
(51) Int. Cl.: C08L 23/16, C08L 53/02, H01B 9/00, H01B 7/02

(54) **RESIN COMPOSITION AND POWER CABLE**

(30) Priority: 03.06.2022 JP 2022091141
(71) Applicant: SUMITOMO ELECTRIC INDUSTRIES, LTD., Osaka-shi, Osaka 541-0041 (JP)
(72) Inventor: YAMASAKI Satoshi, Osaka-shi, Osaka 541-0041 (JP)
(74) Representative: Grünecker Patent- und Rechtsanwälte PartG mbB
(86) International application number: PCT/JP2023/000910
(87) International publication number: WO 2023/233697

(57) **Abstract**

The resin composition includes more than 50 mass% and 80 mass% or less of propylene units; and 20 mass% or more of ethylene units or 7 mass% or more of butene units with respect to 100 mass% of a total content of monomer units in a resin component, the resin composition having a co-continuous structure including a first continuous phase in which the propylene units are relatively more and a second continuous phase in which the propylene units are relatively less, or a sea-island structure including a sea phase in which the propylene units are relatively more, and an island phase in which the propylene units are relatively less and a maximum length in a cross-sectional image observed with a transmission electron microscope is 600 nm or less.

## Description

### [Technical Field]

The present disclosure relates to a resin composition and a power cable.

The present application claims priority based on Japanese Patent Application No. 2022-91141 filed on June 3, 2022, the content of which is incorporated herein by reference in its entirety.

### [Background Art]

Crosslinked polyethylene is excellent in an insulation, and therefore has been widely used as a resin component constituting an insulating layer in a power cable and the like (e.g., PTL. 1).

### [Citation List]

### [Patent Literature]

PTL. 1: Japanese Laid-Open Patent Publication No. S57-69611

### [Summary of Invention]

### [Solution to Problem]

According to an aspect of the present disclosure,
there is provided a resin composition, including:
   more than 50 mass% and 80 mass% or less of propylene units; and
   20 mass% or more of ethylene units or 7 mass% or more of butene units,
   with respect to 100 mass% of a total content of monomer units in a resin component,
the resin composition having
   a co-continuous structure including a first continuous phase in which the propylene units are relatively more and a second continuous phase in which the propylene units are relatively less, or
   a sea-island structure including a sea phase in which the propylene units are relatively more, and an island phase in which the propylene units are relatively less and a maximum length in a cross-sectional image observed with a transmission electron microscope is 600 nm or less.

### [Brief Description of Drawings]

[FIG. 1] FIG. 1 is a schematic cross-sectional view orthogonal to an axial direction of a power cable according to an embodiment of the present disclosure.
[FIG. 2] FIG. 2 is a cross-sectional view of Sample A1-1 observed with a transmission electron microscope.
[FIG. 3] FIG. 3 is a cross-sectional view of Sample A2-3 observed with a transmission electron microscope.
[FIG. 4] FIG. 4 is a cross-sectional view of Sample B1-2 observed with a transmission electron microscope.
[FIG. 5] FIG. 5 is a cross-sectional view of Sample B2-2 observed with a transmission electron microscope.

### [Mode for Carrying Out Invention]

### [Problem to be Solved by the Disclosure]

Crosslinked polyethylene that has been degraded over time cannot be recycled and has no choice but to be incinerated. For this reason, there is concern about the influence on environment.

In recent years, a propylene-containing resin (hereinafter also referred to as a "propylene-based resin") has attracted attention as the resin component constituting the insulating layer. The propylene-based resin, even non-crosslinked one, can achieve an insulation required for a power cable. In other words, both the insulation and recyclability can be achieved.

An object of the present disclosure is to provide a technique that can improve an insulation of an insulating layer containing a propylene-based resin.

### [Advantageous Effect of the Disclosure]

According to the present disclosure, the insulation of the insulating layer containing the propylene-based resin can be improved.

### [Description of Embodiments of the Disclosure]

### <Knowledges Obtained by the Inventor>

First, an outline of the knowledges obtained by the inventor will be described.

The propylene-based resin itself has a large amount of crystals and tends to be hard.

Therefore, in order to control the crystallinity of a propylene-based resin and to improve the flexibility of an insulating layer of a power cable, the present inventor tried mixing the propylene-based resin and a low-crystallinity resin as a resin component constituting the insulating layer.

However, the inventor discovered that in a case where metallic or amber foreign matters are unintentionally mixed into an insulating layer which is a mixture of a propylene-based resin and a low-crystallinity resin, the insulation may be degraded depending on the dispersion state of the low-crystallinity resin.

In a case where metallic or amber foreign matters are mixed into the resin composition, which includes a single resin component, these foreign matters have poor adhesion to the resin component, causing a sudden change in resistance between the foreign matters and the resin component, thereby degrading the insulation. Furthermore, in a case where the foreign matter has a protruding shape, the electric field is more likely to concentrate, which makes the insulation more likely to be degraded.

On the other hand, in a case where foreign matters are mixed into the insulating layer which is a mixture of a propylene-based resin and a low-crystallinity resin, as described above, the foreign matters will be incorporated as described below.

For example, in an insulating layer which is a mixture of a propylene-based resin and a low-crystallinity resin, an interface is formed between these resin phases. For example, the dispersion state of the relatively less low-crystallinity resin varies depending on the compatibility of the low-crystallinity resin with the propylene-based resin and mixing conditions of the resin composition.

When foreign matters are mixed into the insulating layer in such a state, they will be either incorporated into the interface between the propylene-based resin phase and the low-crystallinity resin phase, or preferentially into the low-crystallinity resin phase. In the latter case, the low-crystallinity resin contains more double bonds and OH groups than the propylene-based resin alone does, and therefore intermolecular forces against the foreign matters are more likely to act.

When incorporation of foreign matters at the interface as mentioned above occurs, the foreign matters at the interface become a defect, and local electric concentration can occur at the foreign matters at the interface. Therefore, the insulation of the insulating layer may be degraded.

Alternatively, when incorporation of the foreign matters in the low-crystallinity resin phase as mentioned above occurs, the low-crystallinity resin itself has a lower breakdown value than that of the crystalline propylene-based resin, and therefore withstand voltage characteristic of the low-crystallinity resin phase is further reduced due to the presence of the foreign matters. Therefore, the insulation of the insulating layer may be degraded depending on the dispersion state of the low-crystallinity resin.

Thus, the present inventor has intensively studied the new problem mentioned above, and as a result, succeeded in obtaining the power cable which has high foreign matter resistance by optimizing the composition of each monomer unit in the insulating layer and the mixing conditions of the resin component.

The present disclosure is based on the above-mentioned knowledges found by the inventor.

### <Embodiments of the Disclosure>

Next, embodiments of the present disclosure will be listed and described.

[1] A resin composition according to an aspect of the present disclosure includes:
   more than 50 mass% and 80 mass% or less of propylene units; and
   20 mass% or more of ethylene units or 7 mass% or more of butene units,
   with respect to 100 mass% of a total content of monomer units in a resin component,
      the resin composition having
      a co-continuous structure including a first continuous phase in which the propylene units are relatively more and a second continuous phase in which the propylene units are relatively less, or
      a sea-island structure including a sea phase in which the propylene units are relatively more, and an island phase in which the propylene units are relatively less and a maximum length in a cross-sectional image observed with a transmission electron microscope is 600 nm or less.
   According to this configuration, the insulation of the insulating layer containing the propylene-based resin can be improved.
[2] A power cable according to an aspect of the present disclosure includes:
   a conductor; and
   an insulating layer provided to cover an outer circumference of the conductor,
   the insulating layer including:
      more than 50 mass% and 80 mass% or less of propylene units; and
      20 mass% or more of ethylene units or 7 mass% or more of butene units,
      with respect to 100 mass% of a total content of monomer units in a resin component,
   the insulating layer having
      a co-continuous structure including a first continuous phase in which the propylene units are relatively more and a second continuous phase in which the propylene units are relatively less, or
      a sea-island structure including a sea phase in which the propylene units are relatively more, and an island phase in which the propylene units are relatively less and a maximum length in a cross-sectional image observed with a transmission electron microscope is 600 nm or less.
   According to this configuration, the insulation of the insulating layer containing the propylene-based resin can be improved.
[3] In the power cable described above in [2],
   a content of the butene units in the insulating layer is less than 7 mass%,
   a content of the ethylene units in the insulating layer is 20 mass% or more, and
   the insulating layer has a co-continuous structure including a first continuous phase in which the propylene units are relatively more and a second continuous phase in which the propylene units are relatively less.
   According to this configuration, the insulation of the insulating layer containing the propylene-based resin can be improved.
[4] In the power cable described above in [3],
   in an arbitrary cross-sectional image of the co-continuous structure observed with a transmission electron microscope, a length between both ends of the second continuous phase is 5 µm or more.
   According to this configuration, a conductive path when foreign matters are incorporated can be lengthened.
[5] In the power cable described above in [3] or [4],
   the insulating layer includes:
   a propylene-based resin containing propylene units; and
   a low-crystallinity resin having no melting point or having a melting point of 100°C or less,
   the low-crystallinity resin includes a copolymer containing ethylene units and at least one type of propylene units, butene units, hexene units, and octene units, and
   in the co-continuous structure, the first continuous phase includes the propylene-based resin, and the second continuous phase includes the low-crystallinity resin.
   According to this configuration, good mechanical properties and good electrical properties can be obtained by using the low-crystallinity resin mentioned above.
[6] In the power cable described above in [2],
   a content of the butene units in the insulating layer is 7 mass% or more, and
   the insulating layer has a sea-island structure including a sea phase in which the propylene units are relatively more, and an island phase in which the propylene units are relatively less and a maximum length in a cross-sectional image observed with a transmission electron microscope is 600 nm or less.
   According to this configuration, the insulation of the insulating layer containing the propylene-based resin can be improved.
[7] In the power cable described above in [6],
   the insulating layer includes
      a propylene-based resin containing propylene units, and
      a low-crystallinity resin having no melting point or having a melting point of 100°C or less,
   the low-crystallinity resin includes
      a styrene-based resin containing styrene units and butene units, or
      a copolymer containing ethylene units and butene units, and
   in the sea-island structure, the sea phase includes the propylene-based resin, and the island phase includes the low-crystallinity resin.
   According to this configuration, good mechanical properties and good electrical properties can be obtained by using the low-crystallinity resin mentioned above.
[8] In the power cable described above in any one of [2] to [7],
   the insulating layer includes
      a propylene-based resin containing propylene units, and
      a low-crystallinity resin having no melting point or having a melting point of 100°C or less,
   the low-crystallinity resin includes
      a copolymer containing at least one type of ethylene units and butene units and at least one type of propylene units, hexene units, octene units, isoprene units, and styrene units, or
      a copolymer containing ethylene units and butene units, and
   in the co-continuous structure, the first continuous phase includes the propylene-based resin, and the second continuous phase includes the low-crystallinity resin, or
   in the sea-island structure, the sea phase includes the propylene-based resin, and the island phase includes the low-crystallinity resin.
   According to this configuration, good mechanical properties and good electrical properties can be obtained by using the low-crystallinity resin mentioned above.
[9] In the power cable described above in any one of [2] to [8],
   the insulating layer exhibits AC breakdown electric field strength of 45 kV/mm or more at 27°C in a state where the insulating layer contains metallic or amber foreign matters at a volume content of 0.02% or less.

According to this configuration, a power cable having high foreign matter resistance can be obtained.

### [Details of the Embodiment of the Disclosure]

Next, an embodiment of the present disclosure will be described below with reference to the drawings. The present disclosure is not limited to these illustrations, but intended to be indicated by claims and encompass all the changes which fall within the meaning and scope equivalent to claims.

### <One Embodiment of the Disclosure>

### (1) Resin Composition

The resin composition of the present embodiment, for example, constitutes the insulating layer 130 of the power cable 10 mentioned later.

The resin composition of the present embodiment contains, for example, a propylene-based resin and a low-crystallinity resin as a resin component. A "resin component" here refers to a resin material (polymer) constituting a main component of the resin composition. The "main component" refers to a component with the highest content.

Mixing the propylene-based resin and the low-crystallinity resin can inhibit excessive crystal growth of the propylene-based resin and improve the flexibility of the insulating layer.

### [Propylene-Based Resin]

The propylene-based resin of the present embodiment constitutes the main component of the insulating layer, and contains at least propylene units. Examples of the propylene-based resin include propylene homopolymers (homo polypropylene), and propylene random polymers (random polypropylene).

When the resin composition of the present embodiment is analyzed using a Nuclear Magnetic Resonance (NMR) system, at least propylene units are detected as monomer units derived from the propylene-based resin. For example, when the propylene-based resin is a propylene random polymer, propylene units and ethylene units are detected, and when the low-crystallinity resin is a propylene homopolymer, propylene units are detected.

In the present embodiment, the tacticity of the propylene-based resin as the propylene-based resin is preferably isotactic, for example. The propylene-based resin has been polymerized with a Ziegler-Natta catalyst, and is versatile. Since the tacticity is isotactic, reduction in the melting point can be suppressed in the composition, which is a mixture containing the propylene-based resin and the low-crystallinity resin. As a result, it is possible to stably realize use of the composition in a state where the composition is non-crosslinked or slightly crosslinked.

For reference, examples of other kinds of tacticity include syndiotactic and atactic, both of which are not preferable for the tacticity of the propylene-based resin of the present embodiment. The propylene-based resin having such tacticity cannot obtain a predetermined crystal structure, and itself has a lower melting point. In the composition which is a mixture containing the propylene-based resin and the low-crystallinity resin, the crystals of the propylene-based resin are easily eroded by the low-crystallinity resin. Therefore, the melting point of the composition is lower than the melting point of the propylene-based resin itself. As a result, it becomes difficult to use the composition in a state where the composition is non-crosslinked or slightly crosslinked. For these reasons, syndiotactic and atactic are not preferred.

When the propylene-based resin is a propylene random polymer, the propylene-based resin includes the propylene units and the ethylene units, as mentioned above. A content of the ethylene units in the propylene random polymer is not particularly limited, and is 0.5 mass% or more and 15 mass% or less, for example. By setting the content of the ethylene units in the propylene random polymer to 0.5 mass% or more, it is possible to suppress the growth of spherulites. On the other hand, by setting the content of the ethylene units in the propylene random polymer to 15 mass% or less, it is possible to suppress reduction in melting points and to stably realize use of the composition in a state where the composition is non-crosslinked or slightly crosslinked.

### [Low-Crystallinity Resin]

The low-crystallinity resin of the present embodiment is configured to control the crystallinity of the propylene-based resin and to impart flexibility to the insulating layer. For example, the low-crystallinity resin has no melting point, or the melting point of the low-crystallinity resin is less than 100°C. The enthalpy of fusion of the low-crystallinity resin may be, for example, 50 J/g or less, or 30 J/g or less. The low-crystallinity resin may be considered as a flexible resin.

The low-crystallinity resin of the present embodiment contains, for example, two or more types of monomer units including at least one type of ethylene units and butene units. Specifically, the low-crystallinity resin includes, for example, a copolymer containing at least one type of ethylene units and butene units (butylene units) and at least one type of propylene units, hexene units, octene units, isoprene units, and styrene units. Alternatively, the low-crystallinity resin may include, for example, a copolymer (ethylene-1-butene copolymer mentioned later) containing ethylene units and butene units. When the resin composition of the present embodiment is analyzed using an NMR system, monomer units derived from the low-crystallinity resin are detected.

A carbon-carbon double bond in an olefinic monomer unit is not particularly limited, and may be at an α-position, for example.

The low-crystallinity resin is preferably solid at 25°C, for example. In this case, it becomes difficult to homogeneously mix the propylene-based resin and the low-crystallinity resin. However, since the low-crystallinity resin is solid at 25°C, excessive reduction in the molecular weight can be suppressed. Accordingly, the propylene-based resin and the low-crystallinity resin can be homogeneously mixed.

Examples of the low-crystallinity resin that satisfies the above-mentioned requirements include ethylene-based resins such as Ethylene-Propylene Rubber (EPR), Very Low Density Polyethylene (VLDPE), and styrene-based resins (styrene-containing resins). Two or more of them may be used in combination.

The low-crystallinity resin is preferably a copolymer containing propylene units, for example, from a viewpoint of compatibility with the propylene-based resin which is a propylene-based resin. As an exemplary copolymer containing propylene units, EPR is mentioned among those described above.

The content of the ethylene units in EPR is not particularly limited, but may be 20 mass% or more, or 40 mass% or more, or 55 mass% or more, for example. When the content of the ethylene units in EPR is less than 20 mass%, the compatibility of EPR with the propylene-based resin becomes excessively high. Thus, even when the content of EPR in the molded body is reduced, the molded body can be made more flexible. However, the effect of inhibiting crystallization of the propylene-based resin (also referred to as "crystallization inhibitory effect") may not be developed, and the insulation may deteriorate due to microcracks in spherulites. In contrast, in the present embodiment, by setting the content of the ethylene units in EPR to 20 mass% or more, excessive increase in compatibility of EPR with the propylene-based resin can be suppressed. Therefore, the crystallization inhibitory effect of EPR can be developed while the softening effect of EPR is obtained. As a result, the degradation of the insulation can be suppressed. Furthermore, by setting the content of the ethylene units in EPR to 40 mass% or more or 55 mass% or more, the crystallization inhibitory effect can be stably developed and degradation of the insulation can be stably suppressed.

On the other hand, the low-crystallinity resin may be, for example, a copolymer containing no propylene unit. The copolymer containing no propylene unit may be VLDPE, from the viewpoint of high availability, for example. Note that the density of VLDPE is, for example, 0.855 g/ cm³ or more and 0.890 g/ cm³ or less.

Examples of VLDPE include an ethylene-1-butene copolymer and an ethylene-1-octene copolymer. By adding a copolymer containing no propylene unit as the low-crystallinity resin as described above, complete compatibility can be suppressed while a predetermined amount of the low-crystallinity resin is mixed with the propylene-based resin. The crystallization inhibitory effect can be developed by setting a content of the copolymer containing no propylene unit to a predetermined amount or more.

The content of the ethylene units in the resin composition can be easily increased by using an ethylene-based resin such as EPR or VLDPE mentioned above.

The low-crystallinity resin may be, for example, a styrene-based resin, as mentioned above. The styrene-based resin is a copolymer containing styrene units as a hard segment, and at least one type of monomer units of ethylene units, propylene units, butene units, and isoprene units, as a soft segment. The styrene-based resin can also be referred to as a styrene-based thermoplastic elastomer.

Since the styrene-based resin contains relatively flexible monomer units and relatively rigid monomer units, moldability can be improved. In addition, the aromatic ring included in the styrene-based resin can trap electrons and form a stable resonance structure. Thus, the insulation of the insulating layer can be further improved.

Since the styrene-based resin contains monomer units (e.g., butene units) highly compatible with the propylene-based resin, the propylene-based resin and the low-crystallinity resin can be homogeneously mixed.

Examples of the styrene-based resin include styrene-butadiene-styrene block copolymer (SBS), hydrogenated styrene-butadiene-styrene block copolymer, styrene-isoprene-styrene copolymer (SIS), hydrogenated styrene-isoprene-styrene copolymer, hydrogenated-styrene-butadiene rubber, hydrogenated styrene-isoprene rubber, and styrene-ethylene-butene-olefin crystalline block copolymer. Two or more of them may be used in combination.

The term "hydrogenated" as used herein means hydrogen being added to a double bond. For example, "hydrogenated styrene-butadiene-styrene block copolymer" means a polymer in which hydrogen is added to double bonds of the styrene-butadiene-styrene block copolymer. It should be noted that double bonds in the aromatic ring included in styrene has no hydrogen added thereto. The term "hydrogenated styrene-butadiene-styrene block copolymer" can also be referred to as styrene-ethylene butene-styrene block copolymer (SEBS).

Among the styrene-based resins, hydrogenated materials having no double bond in their chemical structures excluding aromatic rings may be used. When non-hydrogenated materials are used, the resin component may be thermally deteriorated, for example, at the time of molding of the resin composition, which may degrade the properties of the resulting molded body. In contrast, the use of the hydrogenated material can improve resistance to the thermal deterioration. As a result, the properties of the molded body can be maintained at a higher level.

Among the styrene-based resins, resins containing styrene units and butene units may be used. Examples of the resin containing styrene units and butene units include SEBS and SBS. They can be used to easily increase the content of the butene units in the resin composition.

The content of the styrene units in the styrene-based resin is not particularly limited and is, for example, 5 mass% or more and 35 mass% or less. By setting the content of the styrene units in the styrene-based resin within the above-described range, excessive hardening of the material can be suppressed. As a result, separation between the propylene-based resin and the styrene-containing resin and cracking can be suppressed.

### [Non-Crosslinking Property]

The resin composition of the present embodiment is non-crosslinked, for example. The recyclability of the resin composition can be improved by making a molded body non-crosslinked as mentioned above.

### [Other Additives]

The resin composition may contain, for example, an antioxidant, a heat stabilizer, a nucleating agent, a copper inhibitor, a lubricant, and a coloring agent, in addition to the above-mentioned resin component. In the present embodiment, even when a nucleating agent is added, the nucleating agent can be prevented from becoming a defect by adjusting the composition.

### (2) Content of Each of Monomer Units, and Dispersion State of Low-Crystallinity Resin Phase

The inventor has found the optimal composition of the monomer units constituting the resin component to improve foreign matter resistance of the insulating layer.

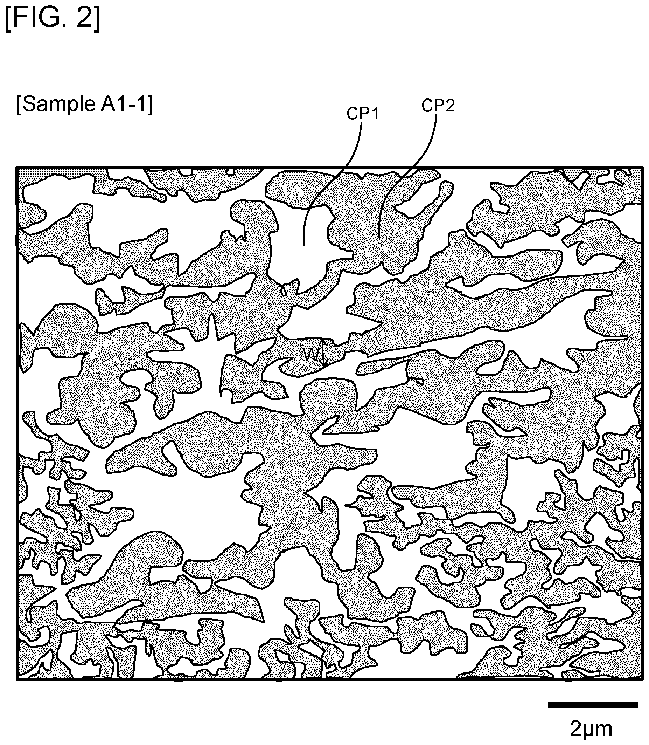

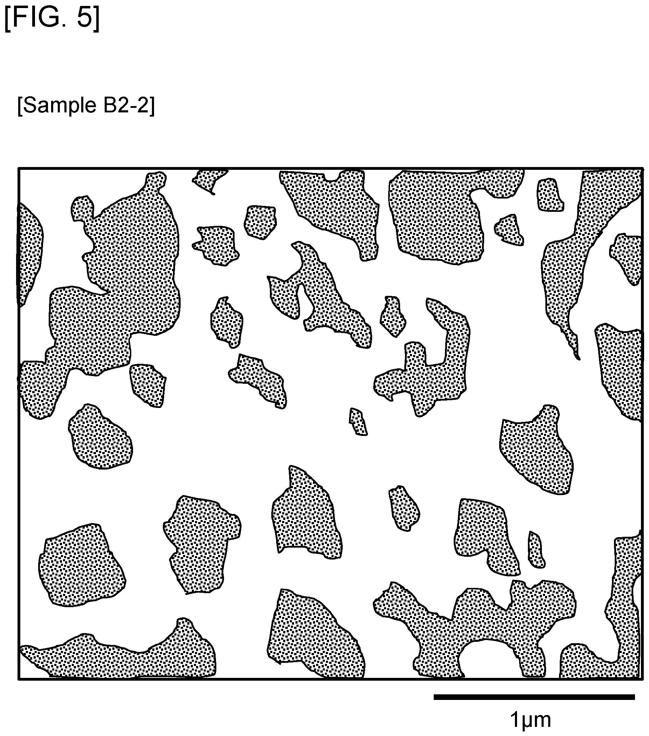

The dispersion state of the low-crystallinity resin phases in the insulating layer depending on the content of each of monomer units will be described with reference to FIG. 2 to FIG. 5. Each of FIG. 2 to FIG. 5 shows an arbitrary cross-sectional image of the insulating layer observed with a transmission electron microscope (TEM). Gray areas in FIG. 2 to FIG. 4 and dot-hatched areas in FIG. 5 each indicate low-crystallinity resin phases.

In the present embodiment, the resin composition includes more than 50 mass% and 80 mass% or less of propylene units; and 20 mass% or more of ethylene units or 7 mass% or more of butene units. The total content (mass percent concentration) of the monomer units in the resin component is taken as 100 mass%. When the resin composition is analyzed using an NMR system, each of monomer units is detected, as mentioned above.

In the present embodiment, by setting the content of the propylene units to more than 50 mass%, the propylene-based resin phase can be formed as a continuous phase throughout the entire insulating layer. Accordingly, the insulation of the propylene-based resin as the main component can be secured while the insulating layer is non-crosslinked. On the other hand, by setting the content of the propylene units to 80 mass% or less, the low-crystallinity resin phase can be secured in the insulating layer. Accordingly, excessive crystal growth of the propylene-based resin can be suppressed.

### [Reference Example 1: Content of Ethylene Units of Less Than 20 mass%]

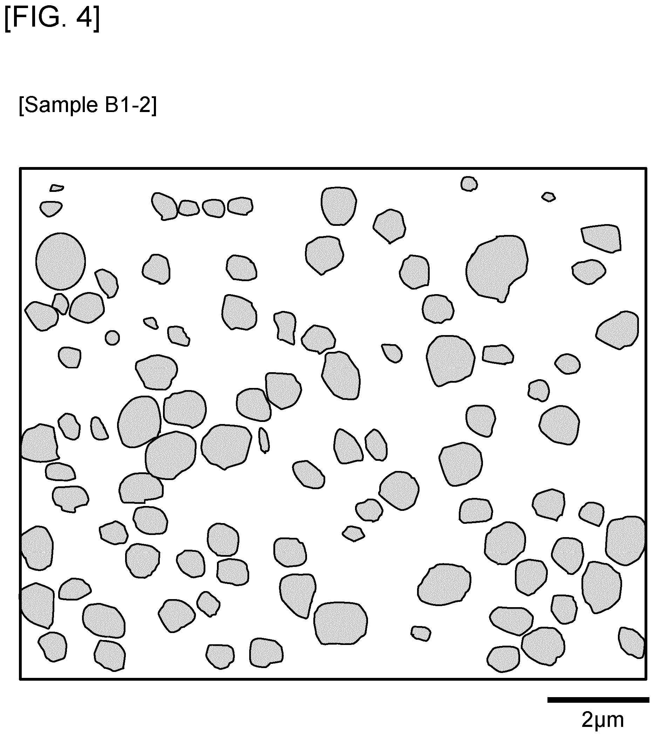

In a case where the resin composition contains no butene unit, and the resin composition contains ethylene units in an amount of less than 20 mass%, the dispersion state of the low-crystallinity resin phases in the insulating layer is, for example, as illustrated in FIG. 4.

When the low-crystallinity resin contains the ethylene units, the low-crystallinity resin containing the ethylene units that has poor compatibility with the propylene-based resin separates from the propylene-based resin. In this case, however, since the low-crystallinity resin phases are less, the low-crystallinity resin phases containing the ethylene units do not become a continuous phase, but the low-crystallinity resin phases form large independent island phases. For this reason, foreign matters are incorporated in the low-crystallinity resin phases as large island phases. The electric field can be concentrated in the independent low-crystallinity resin phase in a state where foreign matters are incorporated therein. As a result, the insulation of the insulating layer may be degraded.

### [Reference Example 2: Content of Butene Units of Less Than 7 mass%]

Alternatively, in a case where the content of the ethylene units in the resin composition is less than 20 mass%, and the resin composition contains the butene units in an amount of less than 7 mass%, the dispersion state of the low-crystallinity resin phases in the insulating layer becomes, for example, as illustrated in FIG. 5. In FIG. 5, although the low-crystallinity resin phase is indicated by dot-hatching, actually individual dots are in contact with each other.

When the low-crystallinity resin contains the butene units, the butene units and the propylene units tend to mix together. Therefore, the low-crystallinity resin containing the butene units and the propylene-based resin are not completely incompatible with each other, and the low-crystallinity resin and the propylene-based resin do not self-assemble individually. As a result, the low-crystallinity resin phases containing the butene units which have good compatibility with the propylene-based resin can form minute island phases. However, when the content of the butene units is less than 7%, dispersibility of the low-crystallinity resin phases as the minute island phases decreases due to low content of the butene units. When the dispersibility of the low-crystallinity resin phases decreases, the low-crystallinity resin phases aggregate, and form apparently large, independent island phases. For this reason, foreign matters are incorporated in the low-crystallinity resin phases which have become apparently large island phases. As a result, the insulation of the insulating layer may be degraded due to the same factors as mentioned above.

### [Present Embodiment 1: Content of Ethylene Units of 20 mass% or More]

In contrast, in the present embodiment, when the content of the butene units in the resin composition is less than 7 mass%, the content of the ethylene units in the resin composition is set to 20 mass% or more, and a production method described later is applied, so that the dispersion state of the low-crystallinity resin phases in the insulating layer is, for example, the state illustrated in FIG. 2. The cases where the content of the butene units in the resin composition is less than 7 mass% encompass a case where the resin composition contains no butene unit.

In this case, the resin composition may include, for example, a copolymer containing ethylene units and at least one type of propylene units, butene units, hexene units, and octene units, as the low-crystallinity resin. Specifically, the resin composition in this case may include, for example, EPR as the low-crystallinity resin. When the content of the butene units in the resin composition is less than 7 mass%, the resin composition may include butene unit-containing VLDPE (ethylene-1-butene copolymer), or the butene unit-containing styrene-based resin in a small amount.

In this case, even when the low-crystallinity resin phases containing the ethylene units that have poor compatibility with the propylene-based resin separate from the propylene-based resin, the low-crystallinity resin can form a continuous phase. That is, the propylene-based resin and the low-crystallinity resin can form a co-continuous structure, thereby preventing the low-crystallinity resin phases from forming independent large island phases.

Specifically, as illustrated in FIG. 2, a co-continuous structure can be formed which includes the first continuous phase CP1 and the second continuous phase CP2. The first continuous phase CP1 includes the propylene-based resin, and contains relatively more propylene units than the second continuous phase CP2 does. The second continuous phase CP2 includes the low-crystallinity resin, and contains relatively less propylene units than the first continuous phase CP1 does.

In the co-continuous structure, each of the first continuous phase CP1 and the second continuous phase CP2 is long and continuous. Specifically, in an arbitrary cross-sectional image of the co-continuous structure observed with TEM, the length between both ends of the second continuous phase CP2 is, for example, 5 µm or more. The "length between both ends of the second continuous phase CP2" used herein refers to a length of a straight line connecting a first end to a second end, which is farthest from the first end, of the second continuous phase CP2. The length between both ends of the first continuous phase CP1 is similar to that of the second continuous phase CP2. By setting the length between both ends of the second continuous phase CP2 to 5 µm or more, a conductive path can be lengthened when foreign matters are incorporated in the second continuous phase CP2 or when foreign matters are incorporated at an interface between the first continuous phase CP1 and the second continuous phase CP2.

The maximum value of the length between both ends of the second continuous phase CP2 and the maximum value of the length between both ends of the first continuous phase CP1 are not particularly limited. However, these phases may extend over the entire insulating layer.

In the co-continuous structure, a second continuous phase CP2 being band-like and having a width W of 5 µm or less is meandering. The "width W of the second continuous phase CP2" used herein refers to a distance from an arbitrary first point on an outer edge of the second continuous phase CP2 to the closest second point on the outer edge opposite to the first point across only the second continuous phase CP. Note that the first continuous phase CP1 is also meandering similarly to the second continuous phase CP2. By making the second continuous phase CP2 being band-like and having a width W of 5 µm or less meander as described above, a complicated co-continuous structure can be formed.

In the co-continuous structure, the total length of the outer edge of the second continuous phase CP2 that is meandering is long. Specifically, in an arbitrary cross-sectional image of the co-continuous structure observed with TEM, the total length of the outer edge of the second continuous phase CP2 is, for example, 5 µm or more, or may be 10 µm or more. The total length of the outer edge of the first continuous phase CP1 is similar to that of the second continuous phase CP2. By setting the total length of the outer edge of the second continuous phase CP2 to 5 µm or more, an insulation distance (distance along a surface) can be lengthened when foreign matters are incorporated in the second continuous phase CP2 or when foreign matters are incorporated at the interface between the first continuous phase CP1 and the second continuous phase CP2.

The formation of such a co-continuous structure can suppress the degradation of the insulation of the insulating layer even when foreign matters are incorporated in the resin composition.

### [Present Embodiment 2: Content of Butene Units of 7 mass% or More]

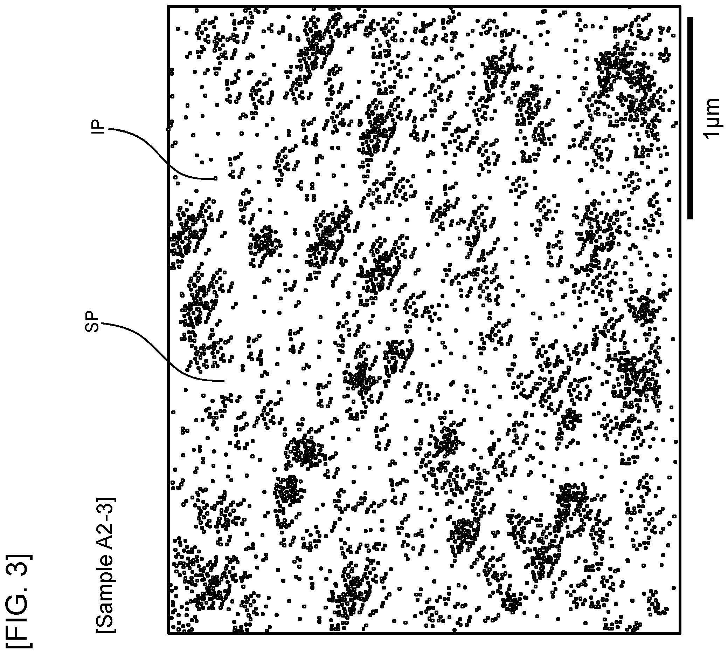

Alternatively, in the present embodiment, the content of the butene units in the resin composition is set to 7 mass% or more regardless of the content of the ethylene units in the resin composition, and a production method described later is applied, so that the dispersion state of the low-crystallinity resin phases in the insulating layer can be, for example, as illustrated in FIG. 3.

The resin composition in this case may include, for example, a styrene-based resin containing styrene units and butene units as the low-crystallinity resin. Specifically, the resin composition in this case may include, for example, at least any one of SEBS, SBS, and the like, as the low-crystallinity resin. Note that the resin composition may include an ethylene-based resin containing ethylene units as long as the content of the butene units in the resin composition is 7 mass% or more.

Alternatively, the resin composition in this case may include a resin containing butylene units, other than styrene-based resin. Specifically, the resin in this case may include, for example, a copolymer (ethylene-1-butene copolymer) containing ethylene units and butene units. Note that the resin composition may include other ethylene-based resins as long as the content of the butene units in the resin composition is 7 mass% or more.

In this case, minute island phases formed by the low-crystallinity resin phases containing butene units, which have good compatibility with the propylene-based resin, can be uniformly dispersed throughout the entire insulating layer. By uniformly dispersing island phases, the island phases can be spaced apart from each other while the distance between the island phases that are adjacent to each other is shortened. That is, the propylene-based resin and the low-crystallinity resin can form a structure which is apparently similar to the co-continuous structure, and formation of large island phases by aggregation of the low-crystallinity resin phases can be suppressed.

Specifically, as illustrated in FIG. 3, a sea-island structure can be formed which includes a sea phase SP and minute island phases IP. The sea phase SP includes the propylene-based resin and contains relatively more propylene units than the island phase IP does. The minute island phase IP includes the low-crystallinity resin, and contains relatively less propylene units than the sea phase SP does.

In a cross-sectional image of the sea-island structure observed with TEM, the maximum length of the island phase IP (the maximum value of the length between both ends of the island phase IP) is, for example, 600 nm or less. The "maximum length of the island phase IP" used herein means the maximum value of the length between both ends of the largest island phase IP, or the maximum value of the length of a straight line connecting both ends of an aggregated portion in which a plurality of island phases IP are arranged successively. By setting the maximum length of the island phase IP to 600 nm or less, in other words, by reducing the size of each island phase, the minute island phases can be uniformly dispersed throughout the entire insulating layer.

The lower limit of the maximum length of the island phase IP is not particularly limited, but is 1 nm, for example.

In an arbitrary cross-sectional image of the sea-island structure observed with TEM, an average distance between the island phases IP that are adjacent to each other may be, for example, 200 nm or less, or 100 nm or less. The "average distance between the island phases IP that are adjacent to each other" is, for example, determined by arbitrarily selecting 100 pairs of island phases IP that are closest and adjacent to each other, and averaging the distances between the island phases IP for the 100 pairs. By setting the average distance between the island phases IP that are adjacent to each other to 200 nm or less, a structure can be formed which is apparently similar to the co-continuous structure.

The average distance between the island phases IP that are adjacent to each other is, for example, 10 nm or more, in order to prevent the island phases IP from getting too close to each other and forming an apparently large island phases.

As described above, by forming a structure apparently similar to the co-continuous structure, degradation of the insulation of the insulating layer can be suppressed even when foreign matters are incorporated in the resin composition.

### [Upper Limit of Ethylene Units or Butene Units]

The content of the ethylene units in the resin composition may be, for example, less than 50 mass%, or 40 mass% or less. When the content of the ethylene units is 50 mass% or more, the ethylene unit is a main component, and sufficient cable properties cannot be obtained when the insulating layer 130 is used in a non-crosslinked state. In contrast, by setting the content of the ethylene units to less than 50 mass%, sufficient cable properties can be obtained when the insulating layer 130 is used in a non-crosslinked state.

The content of the butene units in the resin composition may be, for example, less than 30 mass%, or 25 mass% or less. When the content of the butene units is 30 mass% or more, the melting point of the resin composition decreases excessively, and sufficient cable properties cannot be obtained. In contrast, by setting the content of the butene units to less than 30 mass%, excessive decrease in the melting point of the resin composition can be suppressed, and sufficient cable properties can be obtained.

### [Content of Styrene Units]

When the resin composition contains the styrene-based resin, the content of the styrene units in the resin composition is, for example, 1 mass% or more and 20 mass% or less. By setting the content of the styrene units to 1 mass% or more, concentration of foreign matters at the interface between the propylene-based resin and the low-crystallinity resin can be suppressed. On the other hand, by setting the styrene content to 20 mass% or less, excessive hardening of the resin composition can be suppressed. Concentration of foreign matters in the low-crystallinity resin can also be suppressed.

### (3) Power Cable

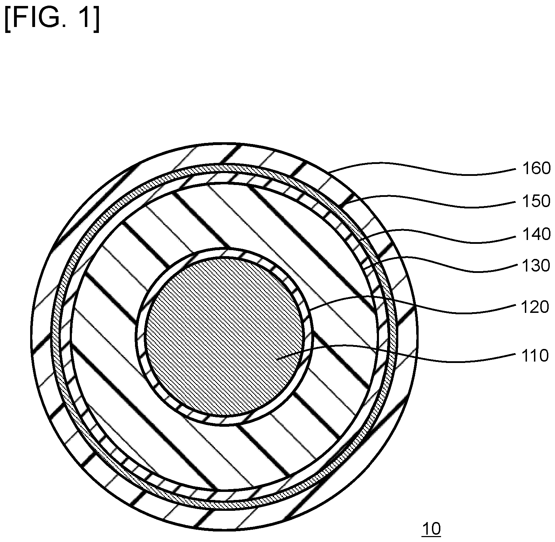

Next, with reference to FIG. 1, the power cable of the present embodiment will be described.

The power cable 10 of the present embodiment is configured as a so-called solid insulation power cable. The power cable 10 of the present embodiment is configured, for example, to be laid on the ground (in a pipeline), under water, or on the bottom of water. Note that the power cable 10 may be used for alternating current, or for direct current, for example.

Specifically, the power cable 10 includes, for example, a conductor 110, an internal semiconductive layer 120, an insulating layer 130, an external semiconductive layer 140, a shielding layer 150, and a sheath 160.

### (Conductor (Conductive Part))

The conductor 110 is configured by twisting together a plurality of conductor core wires (conductive core wires) including, for example, pure copper, copper alloy, aluminum, or aluminum alloy.

### (Internal Semiconductive Layer)

The internal semiconductive layer 120 is provided so as to cover the outer circumference of the conductor 110. In addition, the internal semiconductive layer 120 has semiconductivity and is configured to suppress electric field concentration on the surface of the conductor 110. The internal semiconductive layer 120 includes, for example, at least any one of ethylene-based copolymers such as ethylene-ethyl acrylate copolymers, ethylene-methyl acrylate copolymers, ethylene-butyl acrylate copolymers, and ethylene-vinyl acetate copolymers, olefinic elastomers, the above-mentioned low-crystallinity resins, together with conductive carbon black.

### (Insulating Layer)

The insulating layer 130 is provided so as to cover the outer circumference of the internal semiconductive layer 120. For example, the insulating layer 130 is formed through extrusion molding using the resin composition, as mentioned above.

In the present embodiment, the insulating layer 130 may contain metallic or amber foreign matters at a volume content of 0.02% or less due to its high foreign matter resistance as mentioned later. The "volume content of foreign matters" used herein refers to a ratio of the volume of the foreign matters to the total volume of the insulating layer 130.

In this case, the size of the foreign matter that may be included in the insulating layer 130 is 250 µm or less, in accordance with JEC 3408 (2015).

Note that the insulating layer 130 does not have to contain metallic or amber foreign matters in terms of obtaining high insulation.

### (External Semiconductive Layer)

The external semiconductive layer 140 is provided so as to cover the outer circumference of the insulating layer 130. In addition, the external semiconductive layer 140 has semiconductivity and is configured to suppress electric field concentration between the insulating layer 130 and the shielding layer 150. The external semiconductive layer 140 is constituted by the same material as the internal semiconductive layer 120, for example.

### (Shielding Layer)

The shielding layer 150 is provided so as to cover the outer circumference of the external semiconductive layer 140. The shielding layer 150 is, for example, configured by winding a copper tape, or configured as a wire shield formed by winding a plurality of soft copper wires. A tape including rubberized cloth or the like as a raw material may be wound inside or outside the shielding layer 150.

### (Sheath)

The sheath 160 is provided so as to cover the outer circumference of the shielding layer 150. The sheath 160 is constituted by polyvinyl chloride or polyethylene, for example.

For an underwater cable or a subaqueous cable, the power cable 10 of the present embodiment may have a metallic water-shielding layer such as a so-called aluminum cover or an iron wire armoring outside the shielding layer 150.

On the other hand, the power cable 10 of the present embodiment does not have to include a water-shielding layer outside the shielding layer 150, for example. That is, the power cable 10 of the present embodiment may have an imperfect water shielding structure.

### (Specific Dimensions and the like)

Specific dimensions of the power cable 10 are not particularly limited. For example, the diameter of the conductor 110 is 5 mm or more and 60 mm or less, the thickness of the internal semiconductive layer 120 is 0.5 mm or more and 3 mm or less, the thickness of the insulating layer 130 is 3 mm or more and 35 mm or less, the thickness of the external semiconductive layer 140 is 0.5 mm or more and 3 mm or less, the thickness of the shielding layer 150 is 0.1 mm or more and 5 mm or less, and the thickness of the sheath 160 is 1 mm or more The AC voltage applied to the power cable 10 of the present embodiment is, for example, 20 kV or more.

### (4) Cable Properties

In the present embodiment, since the insulating layer 130 has the co-continuous structure or sea-island structure mentioned above, the power cable 10 has high insulation even in a state where foreign matters are incorporated in the insulating layer 130.

Specifically, the insulating layer 130 exhibits AC breakdown electric field strength of 45 kV/mm or more at 27°C in a state where the insulating layer 130 contains metallic or amber foreign matters at a volume content of 0.02% or less.

The "AC breakdown electric field strength" used herein refers to a breakdown electric field strength when a voltage is applied under conditions where an AC voltage with a commercial frequency (e.g., 60 Hz) is applied to a sample with a thickness of 0.2 mm at an ordinary temperature (27°C) at 10 kV for 10 minutes, and thereafter a cycle including raising the AC voltage by a 1 kV increment and applying the raised voltage for 10 minutes is repeated. In this event, it is assumed that the sample for measurement of AC breakdown electric field strength contains foreign matters.

### (5) Method of Producing Power Cable

Next, a method of producing the power cable of the present embodiment will be described. Hereinafter, the step is abbreviated as "S".

The method of producing the power cable of the present embodiment includes, for example, a conductor preparation step S120, a resin composition preparation step S140, a cable core formation step 300, a shielding layer formation step S400, and a sheath formation step S500.

### (S120: Conductor Preparation Step)

The conductor 110 formed by twisting a plurality of conductor core wires together is prepared.

### (S140: Resin Composition Preparation Step)

On the other hand, the resin composition including the propylene-based resin and the low-crystallinity resin is mixed.

In this event, the resin composition is mixed so as to include, with respect to 100 mass% of a total content of monomer units in a resin component, more than 50 mass% and 80 mass% or less of propylene units; and 20 mass% or more of ethylene units or 7 mass% or more of butene units.

In this event, for example, a twin screw mixer is used to mix the resin composition in the present embodiment. By using the twin screw mixer, the resin composition can be mixed at higher shear force compared to a kneader.

In this event, in the present embodiment, the resin composition is mixed at a temperature of less than 220°C, for example. When the resin composition is mixed at a temperature of 220°C or more, the viscosity of the resin composition decreases due to high temperature. Therefore, it becomes difficult to apply a predetermined shear force to the resin composition. In contrast, in the present embodiment, by setting the mixing temperature to less than 220°C, the viscosity of the resin composition can be maintained high. Accordingly, high shear force can be applied to the resin composition. As a result, the above-mentioned co-continuous structure or sea-island structure can be stably formed.

At this time, in the present embodiment, placement conditions of the kneading discs in the twin screw mixer are adjusted and the rotation number of the twin screw mixer is adjusted, for example. Here, the shear force in the twin screw mixer may be varied, for example, by changing the kneading disc or changing rotation number. For example, when the kneading discs are placed at more than 5 locations and each rotation number is 200 rpm or more, the temperature easily rises during mixing. In contrast, in the present embodiment, the kneading discs are placed at 2 or more and 5 or less locations, and each rotation number is set to 20 rpm or more and less than 200 rpm, for example. Accordingly, the temperature rise to 220°C or more during mixing can be suppressed. By suppressing temperature rise, reduction in viscosity of the resin composition can be suppressed. As a result, high shear force in the twin screw mixer can be maintained.

At this time, in the present embodiment, a filling rate of the resin composition into a cylinder of a twin screw mixer (a ratio of the volume of the resin composition to the cylinder volume) is increased to ensure the residence time of the resin composition in the cylinder, for example. Usually, the filling rate of the resin composition into the cylinder of the twin screw mixer is set to 20% or less to decrease a load on equipment (torque applied to a screw) and secure a discharge rate. In contrast, in the present embodiment, a residence time of the resin composition in the cylinder of the twin screw mixer can be sufficiently secured by setting the filling rate of the resin composition into the cylinder to more than 20%. Accordingly, the above-mentioned co-continuous structure or sea-island structure can be stably formed.

As described above, in the present embodiment, a co-continuous structure including a first continuous phase CP1 in which the propylene units are relatively more and a second continuous phase CP2 in which the propylene units are relatively less in the resin composition can be formed by setting the content of the ethylene units in the resin composition to 20 mass% or more when the content of the butene units in the resin composition is less than 7 mass%, and by applying the above-mentioned new mixing method.

Alternatively, in the present embodiment, a sea-island structure including a sea phase SP in which the propylene units are relatively more and an island phase IP in which the propylene units are relatively less and a maximum length in a cross-sectional image observed with TEM is 600 nm or less can be formed by setting the content of the butene units in the resin composition to 7 mass% or more regardless of the content of the ethylene units in the resin composition and by applying the above-mentioned new mixing method.

After the resin composition is mixed, the resin composition is granulated by an extruder. As a result, pellet-like resin composition is formed which is to constitute the insulating layer 130. Note that the steps from mixing to granulation may be collectively performed.

### (S300: Cable Core Formation Step (Extrusion Step, Insulating Layer Formation Step))

After the conductor preparation step S120 and the resin composition preparation step S140 are completed, the insulating layer 130 is formed using the above-mentioned resin composition so as to cover the outer circumference of the conductor 110.

In this case, in the present embodiment, the insulating layer 130 is extrusion molded using the above-mentioned resin composition, so that the above-mentioned co-continuous structure or sea-island structure is formed in the insulating layer 130 as well.

At this time, in the present embodiment, the internal semiconductive layer 120, the insulating layer 130, and the external semiconductive layer 140 are formed simultaneously using a three-layer co-extruder, for example.

Specifically, for example, a resin composition for the internal semiconductive layer is charged into an extruder A of the three-layer co-extruder, the extruder A forming the internal semiconductive layer 120.

The pellet-like resin composition described above is charged into an extruder B for forming the insulating layer 130. The set temperature of the extruder B is set, for example, to a temperature higher than the desired melting point by 10°C or more and 50°C or less. The set temperature is appropriately adjusted based on a linear velocity and an extrusion pressure.

A resin composition for the external semiconductive layer is charged into an extruder C for forming the external semiconductive layer 140, the rein composition including materials similar to those of the resin composition for the internal semiconductive layer charged into the extruder A.

Then, the respective extrudates from the extruders A to C are guided to a common head, and the internal semiconductive layer 120, the insulating layer 130, and the external semiconductive layer 140, outwardly from the inside, are simultaneously extruded on the outer circumference of the conductor 110. Accordingly, an extruded material that is to be a cable core is formed.

The extruded material is then cooled, for example, with water.

The cable core constituted by the conductor 110, the internal semiconductive layer 120, the insulating layer 130, and the external semiconductive layer 140 is formed through the cable core formation step S300 described above.

### (S400: Shielding Layer Formation Step)

After the cable core is formed, the shielding layer 150 is formed on the outside of the external semiconductive layer 140, for example, by winding a copper tape therearound.

### (S500: Sheath Formation Step)

After the shielding layer 150 is formed, vinyl chloride is charged into an extruder and extruded from the extruder, to form a sheath 160 on the outer circumference of the shielding layer 150.

As described above, the power cable 10 as the solid insulation power cable is produced.

### (6) Summary of Present Embodiment

According to the present embodiment, one or more effects described below are achieved.

(a) In the present embodiment, the propylene-based resin and the low-crystallinity resin are mixed, so that the content of the ethylene units in the resin composition is 20 mass% or more while the content of the butene units in the resin composition is less than 7 mass%. In addition, the resin composition is mixed by the new mixing method mentioned above. Accordingly, even when the low-crystallinity resin phases containing the ethylene units that have poor compatibility with the propylene-based resin separate from the propylene-based resin, the low-crystallinity resin can form a continuous phase. As a result, in the resin composition, a co-continuous structure can be formed which includes a first continuous phase CP1 in which the propylene units are relatively more and a second continuous phase CP2 in which the propylene units are relatively less.
   By forming such a co-continuous structure, foreign matters incorporated in the resin composition can be incorporated in the long-extending second continuous phase CP2 including low-crystallinity resin or at the interface between the first continuous phase CP1 and second continuous phase CP2 which is complicated. This makes it possible to lengthen the conductive path in the low-crystallinity resin phase or the interface, which contain foreign matters, thereby lengthening the insulation distance. As a result, it is possible to suppress degradation of the insulation of the insulating layer due to incorporated foreign matters.
(b) Alternatively, in the present embodiment, the propylene-based resin is mixed with the low-crystallinity resin, so that the content of the butene units in the resin composition is 7 mass% or more regardless of the content of the ethylene units in the resin composition. In addition, the resin composition is mixed by the new mixing method mentioned above. Accordingly, minute island phases formed by the low-crystallinity resin phases containing butene units which have good compatibility with the propylene-based resin can be uniformly dispersed throughout the entire insulating layer. By uniformly dispersing the island phases, the island phases can be spaced apart from each other while the distance between the island phases that are adjacent to each other is shortened. As a result, a sea-island structure including a sea phase SP in which the propylene units are relatively more, and an island phase IP in which the propylene units are relatively less and a maximum length in a cross-sectional image observed with TEM is 600 nm or less can be formed. That is, a structure which is apparently similar to the co-continuous structure can be formed.
   As described above, by forming a structure that is apparently similar to a co-continuous structure, when foreign matters are incorporated in the resin composition, the foreign matters can be incorporated in the dispersed groups of the minute island phases. Therefore, a conductive path formed by dispersed groups of minute island phases containing foreign matters can be lengthened, and the insulation distance can be lengthened. As a result, it is possible to suppress degradation of the insulation of the insulating layer due to incorporated foreign matters.
   As described in (a) and (b), according to the present embodiment, the insulation of the insulating layer 130 including the propylene-based resin can be improved.
(c) In the power cable 10 of the present embodiment, since the insulating layer 130 has the co-continuous structure or sea-island structure mentioned above, degradation of the insulation of the insulating layer 130 can be suppressed even in a state where foreign matters are incorporated in the insulating layer 130. Specifically, the insulating layer 130 exhibits AC breakdown electric field strength of 45 kV/mm or more at 27°C in a state where the insulating layer 130 contains metallic or amber foreign matters at a volume content of 0.02% or less. As described above, in the present embodiment, a power cable 10 having high foreign matter resistance can be obtained.
   By obtaining the power cable 10 having high foreign matter resistance, it is possible to stably suppress not only dielectric breakdown during withstand voltage test after production of cables, but also dielectric breakdown at the time of practical use.
(d) In the present embodiment, the low-crystallinity resin includes a copolymer containing at least one type of ethylene units and butene units and at least one type of propylene units, hexene units, octene units, isoprene units, and styrene units, or a copolymer containing ethylene units and butene units. Therefore, good mechanical characteristics and good electrical characteristics can be obtained.

### <Other Embodiments of the Disclosure>

Although embodiments of the present disclosure have been specifically described, the present disclosure is not limited to the embodiments mentioned above, and various modifications can be made without departing from the scope of the present disclosure.

In the above- mentioned embodiment, an explanation is given for a case where the power cable 10 may have no water-shielding layer, but the present disclosure is not limited to the case. The power cable 10 may have a simple water-shielding layer. Specifically, the simple water-shielding layer includes, for example, a metallic laminated tape. The metallic laminated tape has, for example, a metallic layer made of aluminum or copper, and an adhesive layer provided on either or both sides of the metallic layer. The metallic laminated tape wraps longitudinally around the outer circumference of a cable core (outer circumference outward from the external semiconductive layer) so as to surround the cable core, for example. The water-shielding layer may be provided outside the shielding layer, or may also act as a shielding layer. With such a configuration, the cost of the power cable 10 can be reduced.

In the above-mentioned embodiments, the case where the power cable 10 is laid on land, underwater or on the bottom of water has been described, but the present disclosure is not limited to this case. For example, the power cable 10 may be configured as a so-called overhead wire (overhead insulation wire).

In the above-mentioned embodiment, three layers are extruded simultaneously in the cable core formation step S300, but they may be individually extruded.

### [Examples]

Next, examples according to the present disclosure will be described. These examples are illustrative of the present disclosure, and the present disclosure is not limited by these examples.

### (1) Production of Evaluation Sample

In this example, a sample representing an insulating layer of a power cable was produced by the following procedures. In this example, in order to evaluate an insulation of a resin composition in a state where metallic foreign matters are incorporated therein, metal powder was intentionally added as metallic foreign matters to the resin composition to produce the sample.

### (1-1) Materials

The following materials were prepared as a resin component of each sample.

### [Propylene-Based Resin]

### •Propylene random polymer (r-PP):

Tacticity: isotactic
Ethylene unit content: 10 mass%,
Melt flow rate: 1.3 g/10 min,
Density: 0.9 g/ml,
Melting point :145°C,
Enthalpy of fusion: 100 J/g

### [Low-Crystallinity Resin]

### •Ethylene-propylene rubber (EPR):

Ethylene unit content: 52 mass%,
Mooney viscosity ML (1+4) 100°C: 40,
Melting point : No,
Enthalpy of fusion: No

### •Very low density polyethylene (VLDPE):

Ethylene-1-butene copolymer
1-Butene unit content: 40 mass%,
Melting point : 95°C,
Enthalpy of fusion: 10 J/g
Density: 0.88 g/ml,
Shore A hardness: 66

### •Hydrogenated styrene-butadiene-styrene block copolymer (SEBS):

Styrene unit content: 12 mass%,
Hardness: A42,
Melt flow rate: 4.5 g/10 min (230°C, 2.16 kg),
Melting point : No,
Enthalpy of fusion: No

### •Styrene-butadiene-styrene block copolymer (SBS):

Styrene unit content: 25 mass%,
Hardness: A75,
Melt flow rate: 3.5 g/10 min (230°C, 2.16 kg),
Melting point : No,
Enthalpy of fusion: No

Copper powder was used as the metal powder. Copper powder was obtained by filing a copper material with a metal file, and the copper powder was separated using a sieve with an aperture of 200 µm. Accordingly, a diameter of the copper powder was made to 200 µm or less.

### (1-2) Preparation of Resin Composition

Using the material mentioned above, the resin composition of each sample was prepared.

### [Samples A1-1, A1-2, A2-1, A2-2, A2-3, A3-1, and A3-2]

For Samples A1-1, A1-2, A2-1, A2-2, A2-3, A3-1, and A3-2, r-PP was mixed with any one of EPR, VLDPE, SEBS, and SBS so that the content of each of monomer units was the value shown in Tables 1 to 3 below. At this time, the resin was mixed at a temperature of 200°C using a twin screw mixer. The kneading discs were placed at three locations, and each rotation number was set to 100 rpm, and the filling rate of the resin composition in the cylinder was set to 50%. This method is hereinafter also referred to as a "new mixing method". In this case, the above-mentioned copper powder was further added to the mixed material at a volume ratio of 0.02%.

### [Sample B1-1]

For Sample B1-1, the resin was mixed in the same manner as for Sample A1-1, except that the content of each of monomer units and the mixing method were different. For Sample B1-1, a kneader was used to mix the resin at a temperature of 220°C.

### [Sample B1-2]

For Sample B 1-2, the resin was mixed in the same manner as for Sample A1-1, except that the content of each of monomer units was different.

### [Sample B2-1]

For Sample B2-1, the resin was mixed in the same manner as for Sample A2-1, except that the content of each of monomer units and the mixing method were different. For Sample B2-1, a kneader was used to mix the resin at a temperature of 220°C, similarly to Sample B1-1.

### [Sample B2-2]

For Sample B2-2, the resin was mixed in the same manner as for Sample A2-1, except that the content of each of monomer units was different.

### (1-3) Production of Sheet for Evaluation

Next, the resin composition of each of the prepared samples was press-molded at 200°C and slowly cooled by water cooling under pressure to produce a sheet for evaluation having a thickness of 0.4 mm. In the production of the sheet, the resin composition was extruded so that the copper powder having a diameter of 200 µm or less was placed in the center of the sheet.

### (2) Evaluation

### [NMR]

Each of the above samples was dissolved in orthochlorobenzene and analyzed using an NMR system manufactured by JEOL Ltd. in a temperature environment of 130°C. The composition ratio of the monomer units was calculated from the peak area ratio obtained from ¹H-NMR and ¹³C-NMR.

### [TEM Cross-Sectional Observation]

In each of the above-mentioned samples, heavy metal staining was performed, and cross section processing was performed by the ultra-thin section method. Thereafter, the cross section of each sample was observed with TEM at an acceleration voltage of 100 kV.

A case where the phase structure satisfies the co-continuous structure including a first continuous phase in which the propylene units are relatively more and a second continuous phase in which the propylene units are relatively less in a cross-sectional image of the sample observed with TEM was evaluated as A1 (good). Alternatively, a case where the phase structure in that cross-section satisfies a sea-island structure including a sea phase in which the propylene units are relatively more and an island phase in which the propylene units are relatively less and a maximum length in a cross-sectional image observed with a transmission electron microscope is 600 nm or less was evaluated as A2 (good). On the other hand, a case where the phase structure in that cross-section fails to satisfy both of A1 and A2 structures was evaluated as B (poor).

### [AC Breakdown Test]

An AC voltage was applied to the sheet of each sample at an ordinary temperature (25°C) under conditions where an AC voltage with a commercial frequency (e.g., 60 Hz) was applied at 10 kV for 10 minutes, and thereafter a cycle including raising the AC voltage by a 1 kV increment and applying the raised voltage for 10 minutes was repeated. The electric field strength when the sheet underwent dielectric breakdown was measured. As a result, a case where the AC breakdown electric field strength was 45 kV/mm or more was evaluated as good, and a case where the AC breakdown electric field strength was less than 45 kV/mm was evaluated as poor.

### (3) Results

With reference to the following Table 1 and FIG. 2 to FIG. 5, the evaluation result of each sample will be described.

**[Table 1]**

| | Sample A1-1 | Sample A1-2 | Sample B1-1 | Sample B1-2 |
|---|---|---|---|---|
| r-PP | Contained | Contained | Contained | Contained |
| EPR | Contained | Contained | Contained | Contained |
| VLDPE | | | | |
| SEBS | | | | |
| SBS | | | | |
| Propylene units (wt%) | 66 | 77 | 72 | 94 |
| Ethylene units (wt%) | 34 | 23 | 28 | 6 |
| Butene units (wt%) | | | | |
| Styrene units (wt%) | | | | |
| Mixing device | Twin screw mixing device | Twin screw mixing device | Kneader | Twin screw mixing device |
| Mixing temperature | 200°C | 200°C | 220°C | 200°C |
| | | | | |
| TEM cross-sectional image | FIG. 2 | Similar to FIG. 2 | Similar to FIG. 4 | FIG. 4 |
| Phase structure | A1 | A1 | B | B |
| AC Breakdown electric field strength (kV/mm) | 58 | 62 | 37 | 22 |

**[Table 2]**

| | Sample A2-1 | Sample A2-2 | Sample A2-3 | Sample B2-1 | Sample B2-2 |
|---|---|---|---|---|---|
| r-PP | Contained | Contained | Contained | Contained | Contained |
| EPR | | | | | |
| VLDPE | | | | | |
| SEBS | Contained | Contained | | Contained | Contained |
| SBS | | | Contained | | |
| Propylene units (wt%) | 69 | 69 | 80 | 69 | 65 |
| Ethylene units (wt%) | 9 | 11 | | 10 | 9 |
| Butene units (wt%) | 7 | 15 | 15 | 7 | 3 |
| Styrene units (wt%) | 15 | 5 | 5 | 14 | 23 |
| Mixing device | Twin screw mixer | Twin screw mixer | Twin screw mixer | Kneader | Twin screw mixer |
| Mixing temperature | 200°C | 200°C | 200°C | 220°C | 200°C |
| | | | | | |
| TEM cross-sectional image | Similar to FIG. 3 | Similar to FIG. 3 | FIG. 3 | Similar to FIG. 5 | FIG. 5 |
| Phase structure | A2 | A2 | A2 | B | B |
| AC Breakdown electric field strength (kV/mm) | 64 | 61 | 69 | 41 | 33 |

**[Table 3]**

| | Sample A3-1 | Sample A3-2 |
|---|---|---|
| r-PP | Contained | Contained |
| EPR | Contained | |
| VLDPE | | Contained |
| SEBS | Contained | |
| SBS | | |
| Propylene units (wt%) | 60 | 52 |
| Ethylene units (wt%) | 28 | 40 |
| Butene units (wt%) | 9 | 7 |
| Styrene units (wt%) | 3 | |
| Mixing device | Twin screw mixer | Twin screw mixer |
| Mixing temperature | 200°C | 200°C |
| | | |
| TEM cross-sectional image | Similar to FIG. 3 | Similar to FIG. 3 |
| Phase structure | A2 | A2 |
| AC Breakdown electric field strength (kV/mm) | 57 | 52 |

As a result of the above-mentioned NMR analysis, it was confirmed that each of the samples satisfied the content of each of monomer units shown in Tables 1 to 3. Other evaluation results for each sample are explained below.

### [Sample B1-1]

In Sample B1-1, although the content of the propylene units was more than 50 mass% and the content of the ethylene units was 20 mass% or more, the resin was mixed with a kneader at a temperature of 220°C.

In the TEM cross-sectional image of Sample B1-1, the phase structure similar to FIG. 4 was observed. The low-crystallinity resin phase did not become a continuous phase, but the low-crystallinity resin phase formed large independent island phases. The maximum value of the length between both ends of the large island phase (the maximum length of the island phase) was about 2.8 µm. Therefore, Sample B1-1 did not satisfy the requirements for the co-continuous structure of A1 and the sea-island structure of A2. As a result, the AC breakdown electric field strength of Sample B1-1 was less than 45 kV/mm.

In Sample B1-1, the shear force during mixing was insufficient, and the resin composition was not mixed sufficiently. Therefore, a co-continuous structure was not formed. As a result, it is considered that the electric field was concentrated in the low-crystallinity resin phases that were independent in a state where foreign matters were incorporated therein, causing degradation of the insulation of the insulating layer.

### [Sample B1-2]

In Sample B1-2, the resin composition contained no butene unit, and the content of the ethylene units was less than 20 mass%.

In the TEM cross-sectional image of Sample B1-2, the phase structure shown in FIG. 4 was observed. Similarly to Sample B1-1, the low-crystallinity resin phase did not become a continuous phase, but the low-crystallinity resin phase formed large independent island phases. The maximum value of the length between both ends of the large island phase was about 1.2 µm. Therefore, Sample B1-2 did not satisfy the requirements for the co-continuous structure of A1 and the sea-island structure of A2. As a result, the AC breakdown electric field strength of Sample B1-2 was less than 45 kV/mm.

In Sample B1-2, because of less low-crystallinity resin phase, a co-continuous structure was not formed. Therefore, similarly to Sample B1-1, it is considered that the insulation of the insulating layer was degraded.

### [Sample B2-1]

In Sample B2-1, although the content of the propylene units was more than 50 mass% and the content of the butene units was 7 mass% or more, the resin was mixed with a kneader at a temperature of 220°C.

In the TEM cross-sectional image of Sample B2-1, the phase structure similar to FIG. 5 was observed. The low-crystallinity resin phase formed minute island phases, and the minute island phases aggregated to form large island phases. The maximum value of the length between both ends of the large island phase was about 800 nm. Therefore, Sample B2-1 did not satisfy the requirements for the co-continuous structure of A1 and the sea-island structure of A2. As a result, the AC breakdown electric field strength of Sample B2-1 was less than 45 kV/mm.

In Sample B2-1, the shear force during mixing was insufficient, and the resin composition was not mixed sufficiently. For this reason, the minute island phases were not sufficiently dispersed. As a result, it is considered that the electric field was concentrated in the apparently large island phases in a state where foreign matters are incorporated, thereby degrading the insulation of the insulating layer.

### [Sample B2-2]

In Sample B2-2, the content of the ethylene units was less than 20 mass%, and the content of the butene units was less than 7 mass%.

In the TEM cross-sectional image of Sample B2-2, the phase structure shown in FIG. 5 was observed. Similar to Sample B2-1, minute island phases aggregated to form large island phases. The maximum value of the length between both ends of the large island phase was about 1.4 µm. Therefore, Sample B2-2 did not satisfy the requirements for the co-continuous structure of A1 and the sea-island structure of A2. As a result, the AC breakdown electric field strength of Sample B1-2 was less than 45 kV/mm.

In Sample B2-2, because of less butene units which have good compatibility with the propylene-based resin, the dispersibility of the low-crystallinity resin phases as the minute island phases decreased. Therefore, similarly to Sample B2-1, it is considered that the insulation of the insulating layer was degraded.

### [Samples A1-1 and A1-2]

In contrast, in Samples A1-1 and A1-2, the content of the propylene units was more than 50 mass%, the content of the butene units was less than 7 mass%, and the content of the ethylene units was 20 mass% or more. The new mixing method mentioned above was applied.

In TEM cross-sectional images of Samples A1-1 and A1-2, the phase structure shown in FIG. 2 and the phase structure similar to FIG. 2 were observed, respectively. That is, each of the first continuous phase and the second continuous phase was long and continuous. The second continuous phase being band-like and having a width of 5 µm or less was meandering and extending across almost the entire visual field. The length between both ends of the second continuous phase was 10 µm or more at the lowest estimate. The total length of the outer edge of the second continuous phase was 20 µm or more at the lowest estimate. As described above, Samples A1-1 and A1-2 satisfied the requirements for the co-continuous structure of A1. As a result, AC breakdown electric field strengths of Samples A1-1 and A1-2 were 45 kV/mm or more.

In Samples A1-1 and A1-2, a co-continuous structure could be formed by setting the content of the ethylene units to 20 mass% or more while setting the content of the butene units to less than 7 mass%, and by applying the above-mentioned new mixing method. Accordingly, a conductive path in the low-crystallinity resin phase or interface thereof containing foreign matters could be lengthened. As a result, in Samples A1-1 and A1-2, it is confirmed that degradation of the insulation of the insulating layer due to incorporated foreign matters can be suppressed.

### [Samples A2-1, A2-2, A2-3, A3-1, and A3-2]

On the other hand, in Samples A2-1, A2-2, A2-3, A3-1, and A3-2, the content of the propylene units was more than 50 mass%, and the content of the butene units was 7 mass% or more. The new mixing method mentioned above was applied.

In the TEM cross-sectional images of Samples A2-1, A2-2, A2-3, A3-1, and A3-2, phase structures illustrated in FIG. 3 or phase structures similar to FIG. 3 were observed. That is, minute island phases are uniformly dispersed in the sea phase. Even when aggregated minute island phases were considered as a single large island phase, the maximum length of the island phase was about 500 nm. The average distance between the island phases that are adjacent to each other was about 50 nm. As described above, Samples A2-1, A2-2, A2-3, A3-1, and A3-2 satisfied the requirements for the sea-island structure of A2. As a result, the AC breakdown electric field strengths of Samples A2-1, A2-2, A2-3, A3-1, and A3-2 were 45 kV/mm or more.

In Samples A2-1, A2-2, A2-3, A3-1, and A3-2, the content of the butene units is set to 7 mass% or more, and the new mixing method mentioned above is applied, so that a sea-island structure in which minute island phases are uniformly dispersed can be formed, and a structure which is apparently similar to the co-continuous structure can be formed. Therefore, a conductive path formed by dispersed groups of minute island phases containing foreign matters can be lengthened. As a result, in Samples A2-1, A2-2, A2-3, A3-1, and A3-2, it is confirmed that degradation of the insulation of the insulating layer due to incorporated foreign matters can be suppressed.

### <Supplementary Descriptions>

Hereinafter, supplementary descriptions of the aspects of the present disclosure will be given.

### (Supplementary Description 1)

A resin composition including:
more than 50 mass% and 80 mass% or less of propylene units; and
20 mass% or more of ethylene units or 7 mass% or more of butene units,
with respect to 100 mass% of a total content of monomer units in a resin component,
   the resin composition having
   a co-continuous structure including a first continuous phase in which the propylene units are relatively more and a second continuous phase in which the propylene units are relatively less, or
   a sea-island structure including a sea phase in which the propylene units are relatively more, and an island phase in which the propylene units are relatively less and a maximum length in a cross-sectional image observed with a transmission electron microscope is 600 nm or less.

### (Supplementary Description 2)

A power cable including:
a conductor; and
an insulating layer provided to cover an outer circumference of the conductor,
   the insulating layer including:
      more than 50 mass% and 80 mass% or less of propylene units; and
      20 mass% or more of ethylene units or 7 mass% or more of butene units,
      with respect to 100 mass% of a total content of monomer units in a resin component,
   the insulating layer having
      a co-continuous structure including a first continuous phase in which the propylene units are relatively more and a second continuous phase in which the propylene units are relatively less, or
      a sea-island structure including a sea phase in which the propylene units are relatively more, and an island phase in which the propylene units are relatively less and a maximum length in a cross-sectional image observed with a transmission electron microscope is 600 nm or less.

### (Supplementary Description 3)

The power cable according to supplementary description 2,
wherein a content of the butene units in the insulating layer is less than 7 mass%,
a content of the ethylene units in the insulating layer is 20 mass% or more, and
the insulating layer has a co-continuous structure including a first continuous phase in which the propylene units are relatively more and a second continuous phase in which the propylene units are relatively less.

### (Supplementary Description 4)

The power cable according to supplementary description 3,
wherein in an arbitrary cross-sectional image of the co-continuous structure observed with a transmission electron microscope, a length between both ends of the second continuous phase is 5 µm or more.

### (Supplementary Description 5)

The power cable according to supplementary description 3 or 4,
wherein in an arbitrary cross-sectional image of the co-continuous structure observed with a transmission electron microscope, the second continuous phase being band-like and having a width of 5 µm or less is meandering.

### (Supplementary Description 6)

The power cable according to any one of supplementary descriptions 3 to 5,
wherein in an arbitrary cross-sectional image of the co-continuous structure observed with a transmission electron microscope, a total length of an outer edge of the second continuous phase is 5 µm or more.

### (Supplementary Description 7)

The power cable according to any one of supplementary descriptions 3 to 6,
wherein the insulating layer includes
   a propylene-based resin containing propylene units, and
   a low-crystallinity resin having no melting point or having a melting point of 100°C or less,
the low-crystallinity resin includes a copolymer containing ethylene units and at least one type of propylene units, butene units, hexene units, and octene units, and
in the co-continuous structure, the first continuous phase includes the propylene-based resin, and the second continuous phase includes the low-crystallinity resin.

### (Supplementary Description 8)

The power cable according to supplementary description 2,
wherein a content of the butene units in the insulating layer is 7 mass% or more, and
the insulating layer has a sea-island structure including a sea phase in which the propylene units are relatively more, and an island phase in which the propylene units are relatively less and a maximum length in a cross-sectional image observed with a transmission electron microscope is 600 nm or less.

### (Supplementary Description 9)

The power cable according to supplementary description 8,
wherein in an arbitrary cross-sectional image of the sea-island structure observed with a transmission electron microscope, an average distance between the island phases which are adjacent to each other is 200 nm or less.

### (Supplementary Description 10)

The power cable according to supplementary description 8 or 9,
wherein the insulating layer includes
   a propylene-based resin containing propylene units, and
   a low-crystallinity resin having no melting point or having a melting point of 100°C or less,
the low-crystallinity resin includes
   a styrene-based resin containing styrene units and butene units, or
   a copolymer containing ethylene units and butene units, and
in the sea-island structure, the sea phase includes the propylene-based resin, and the island phase includes the low-crystallinity resin.

### (Supplementary Description 11)

The power cable according to any one of supplementary descriptions 2 to 10,
wherein the insulating layer includes
   a propylene-based resin containing propylene units, and
   a low-crystallinity resin having no melting point or having a melting point of 100°C or less,
the low-crystallinity resin includes
   a copolymer containing at least one type of ethylene units and butene units and at least one type of propylene units, hexene units, octene units, isoprene units, and styrene units, or
   a copolymer containing ethylene units and butene units, and
in the co-continuous structure, the first continuous phase includes the propylene-based resin, and the second continuous phase includes the low-crystallinity resin, or
in the sea-island structure, the sea phase includes the propylene-based resin, and the island phase includes the low-crystallinity resin.

### (Supplementary Description 12)

The power cable according to supplementary description 7, 10, or 11,
wherein a tacticity of the propylene-based resin is isotactic.

### (Supplementary Description 13)

The power cable according to any one of supplementary descriptions 2 to 12,
wherein the insulating layer exhibits AC breakdown electric field strength of 45 kV/mm or more at 27°C in a state where the insulating layer contains metallic or amber foreign matters at a volume content of 0.02% or less.

### (Supplementary Description 14)

A method of producing a power cable, including:
preparing a resin composition; and
forming an insulating layer including the resin composition to cover an outer circumference of the conductor,
wherein in the preparation of the resin composition, the resin composition is mixed so as to include more than 50 mass% and 80 mass% or less of propylene units; and 20 mass% or more of ethylene units or 7 mass% or more of butene units with respect to 100 mass% of a total content of monomer units in a resin component, and
in the resin composition,
a co-continuous structure is formed which includes a first continuous phase in which the propylene units are relatively more and a second continuous phase in which the propylene units are relatively less, or
a sea-island structure is formed which includes a sea phase in which the propylene units are relatively more, and an island phase in which the propylene units are relatively less and a maximum length in a cross-sectional image observed with a transmission electron microscope is 600 nm or less.

### [Reference Signs List]

- 10: Power cable
- 110: Conductor
- 120: Internal semiconductive layer
- 130: Insulating layer
- 140: External semiconductive layer
- 150: Shielding layer
- 160: Sheath

## Claims

1. A resin composition comprising:
more than 50 mass% and 80 mass% or less of propylene units; and
20 mass% or more of ethylene units or 7 mass% or more of butene units,
with respect to 100 mass% of a total content of monomer units in a resin component,
the resin composition having
a co-continuous structure including a first continuous phase in which the propylene units are relatively more and a second continuous phase in which the propylene units are relatively less, or
a sea-island structure including a sea phase in which the propylene units are relatively more, and an island phase in which the propylene units are relatively less and a maximum length in a cross-sectional image observed with a transmission electron microscope is 600 nm or less.

2. A power cable comprising:
a conductor; and
an insulating layer provided to cover an outer circumference of the conductor,
the insulating layer including:
more than 50 mass% and 80 mass% or less of propylene units; and
20 mass% or more of ethylene units or 7 mass% or more of butene units,
with respect to 100 mass% of a total content of monomer units in a resin component,
the insulating layer having
a co-continuous structure including a first continuous phase in which the propylene units are relatively more and a second continuous phase in which the propylene units are relatively less, or
a sea-island structure including a sea phase in which the propylene units are relatively more and an island phase in which the propylene units are relatively less and a maximum length in a cross-sectional image observed with a transmission electron microscope is 600 nm or less.

3. The power cable according to claim 2,
wherein a content of the butene units in the insulating layer is less than 7 mass%,
a content of the ethylene units in the insulating layer is 20 mass% or more, and
the insulating layer has a co-continuous structure including a first continuous phase in which the propylene units are relatively more and a second continuous phase in which the propylene units are relatively less.

4. The power cable according to claim 3,
wherein in an arbitrary cross-sectional image of the co-continuous structure observed with a transmission electron microscope, a length between both ends of the second continuous phase is 5 µm or more.

5. The power cable according to claim 3 or 4,
wherein the insulating layer comprises:
a propylene-based resin containing propylene units; and
a low-crystallinity resin having no melting point or having a melting point of 100°C or less,
the low-crystallinity resin includes a copolymer containing ethylene units and at least one type of propylene units, butene units, hexene units, and octene units, and
in the co-continuous structure, the first continuous phase includes the propylene-based resin, and the second continuous phase includes the low-crystallinity resin.

6. The power cable according to claim 2,
wherein a content of the butene units in the insulating layer is 7 mass% or more, and
the insulating layer has a sea-island structure including a sea phase in which the propylene units are relatively more and an island phase in which the propylene units are relatively less and a maximum length in a cross-sectional image observed with a transmission electron microscope is 600 nm or less.

7. The power cable according to claim 6,
wherein the insulating layer includes
a propylene-based resin containing propylene units, and
a low-crystallinity resin having no melting point or having a melting point of 100°C or less,
the low-crystallinity resin includes
a styrene-based resin containing styrene units and butene units, or
a copolymer containing ethylene units and butene units, and
in the sea-island structure, the sea phase includes the propylene-based resin, and the island phase includes the low-crystallinity resin.

8. The power cable according to any one of claims 2 to 7,
wherein the insulating layer includes
a propylene-based resin containing propylene units, and
a low-crystallinity resin having no melting point or having a melting point of 100°C or less,
the low-crystallinity resin includes
a copolymer containing at least one type of ethylene units and butene units and at least one type of propylene units, hexene units, octene units, isoprene units, and styrene units, or
a copolymer containing ethylene units and butene units, and
in the co-continuous structure, the first continuous phase includes the propylene-based resin, and the second continuous phase includes the low-crystallinity resin, or
in the sea-island structure, the sea phase includes the propylene-based resin, and the island phase includes the low-crystallinity resin.

9. The power cable according to any one of claims 2 to 8,
wherein the insulating layer exhibits AC breakdown electric field strength of 45 kV/mm or more at 27°C in a state where the insulating layer contains metallic or amber foreign matters at a volume content of 0.02% or less.
